# EUROPÄISCHE PATENTSCHRIFT

(11) **EP 2 086 739 B1**
(45) Veröffentlichungstag und Bekanntmachung des Hinweises auf die Patenterteilung: **30.03.2011**
(21) Anmeldenummer: 07819095.6
(22) Anmeldetag: 18.10.2007
(51) Int. Cl.: B29C 45/14, C09D 1/10

(54) **BEDRUCKTE, VERFORMBARE FOLIEN**
PRINTED DEFORMABLE FILMS
FEUILLES IMPRIMÉES ET DÉFORMABLES

(30) Priorität: 31.10.2006 DE 102006051897
(43) Veröffentlichungstag der Anmeldung: 12.08.2009
(73) Patentinhaber: Bayer MaterialScience AG, 51368 Leverkusen (DE)
(72) Erfinder: WEIKARD, Jan, 51519 Odenthal-Erberich (DE); MEYER, Klaus, 41539 Dormagen (DE); BRAUN, Hans, 41515 Grevenbroich (DE); KÜNZEL, Roland, 51381 Leverkusen (DE); LUEHMANN, Erhard, 29699 Bomlitz (DE); RAPPEN, Diethelm, 47495 Rheinberg (DE); STOECKEL, Nicolas, 50733 Köln (DE)
(86) Internationale Anmeldenummer: PCT/EP2007/009027
(87) Internationale Veröffentlichungsnummer: WO 2008/052665

(56) Entgegenhaltungen:
- EP-A- 0 688 839
- EP-A- 0 819 516
- WO-A-00/63015
- JP-A- 4 298 350
- KR-A- 20010 083 548

## Beschreibung

Die vorliegende Erfindung betrifft Folien, ein Verfahren zur Bedruckung dieser Folien, die Härtung von mit Druckverfahren aufgebrachten Schichten und aus diesen hergestellte Formkörper.

Es sind Verfahren bekannt, bei denen zunächst eine Kunststofffolie mittels gängiger Lackierverfahren wie Rakeln, Spritzen oder Tauchen großflächig beschichtet wird, die Beschichtung durch physikalische Trocknung oder Teilhärtung nahezu klebfrei antrocknet. Gegebenenfalls nach Schützen der beschichteten Folie durch eine weitere laminierte oder kaschierte Schutzfolie kann die Folie dann bei erhöhten Temperaturen verformt werden. Dieses Konzept bietet viel Potential für die Herstellung z.B. von Fahrzeuganbauteilen durch Kunststoffverarbeiter, wo der aufwendigere Lackierschritt dreidimensionaler Bauteile durch die einfachere Beschichtung eines flächigen Substrats ersetzt werden könnte.

In aller Regel setzen gute Oberflächeneigenschaften eine hohe Vernetzungsdichte der Beschichtung voraus. Hohe Vemetzungsdichten führen aber zu duromerem Verhalten mit maximal möglichen Verstreckungsgraden von nur wenigen Prozent, so dass die Beschichtung während des Umformvorganges zur Rissbildung neigt. Dieser offensichtliche Konflikt zwischen erforderlicher hoher Vernetzungsdichte und angestrebtem hohen Verstreckungsgrad kann auf unterschiedlichen Wegen gelöst werden, z.B. indem die Härtung in zwei Schritten, vor und nach der Umformung, durchgeführt wird.

Dies kann z.B. durch Trocknung/Härtung nach zwei unterschiedlichen Mechanismen realisiert werden.

Die EP-A 0 819 516 beschreibt ein Verfahren zum Lackieren eines Gegenstandes während eines Umformvorgangs mittels einer verformbaren, strahlungshärtbaren Lackfolie. Nachteilig ist dabei, dass aufgrund der tiefen Glasübergangstemperatur die Blockfestigkeit der lackierten Folie vor dem Verformen und Nachhärten nicht in ausreichendem Maß gegeben ist. Dies beeinträchtigt die Handhabung vor der Endhärtung erheblich und ist für die industrielle Anwendung von großem Nachteil, da solche Folien beispielsweise nicht oder nur unter Verwendung von Schutzfolien aufgerollt werden können, da sie sonst verbacken. Außerdem ist diesem Stand der Technik außer der Glasübergangstemperatur und der Nennung von Polymerklassen ("Phosphazene, Urethane, Acrylate") nicht zu entnehmen, wie die Komponenten eines Lacksystems beschaffen sein müssen, um thermoplastische Verformbarkeit und duromeres Verhalten, insbesondere Beständigkeiten gegen Witterung und Verkratzen nach der Endhärtung zu ermöglichen. Außerdem werden die erzielbaren Verstreckungsgrade nicht genannt.

Die WO 00/63015 beschreibt ebenfalls eine beschichtete verformbare Folie, die mittels Strahlung gehärtet werden kann. Durch Zusatz von polymeren Komponenten mit einer Glasübergangstemperatur oberhalb 40°C wird eine verbesserte Blockfestigkeit vor der Verformung erreicht. Ähnliche Folien werden auch in WO 2005/080484, WO 2005/099943, WO 2005/118689, WO 2006/048109 beschrieben. In keinem Fall erfolgt jedoch die Beschichtung durch Druckverfahren.

Das Auftragen der Beschichtungen erfolgt bei allen bekannten Verfahren durch übliche Lackierverfahren, die zur Herstellung von kleinen Flächen und/oder mehrfarbigen Dekoren nicht geeignet und/oder unwirtschaftlich sind.

Die EP-A 0 688 839 beschreibt hochtemperaturbeständige, flexible Siebdruckfarben auf Basis eines speziellen Polycarbonatbindemittels. Solche Siebdruckfarben werden z.B. zum Bedrucken verformbarer Folien, die auch hinterspritzt werden können, verwendet. Ein entsprechendes Verfahren lehrt die EP-A 0 691 201. Die mittels Druckverfahren aufgebrachten Beschichtungen sind aufgrund von fehlender Vernetzung im Hinblick auf chemische und mechanische Widerstandsfähigkeit konventionellen, vernetzten Beschichtungen unterlegen.

Zusammenfassend lässt sich feststellen, dass aus dem Stand der Technik ein Verfahren zur Herstellung von verformten bedruckten Folien nicht bekannt ist, welches folgende Voraussetzungen erfüllt:
1) Einfache Applikation mit üblichen Druckverfahren auf einer Folie oder einem Folienverbund
2) Thermische Trocknung und gegebenenfalls Härtung über einen Polyadditionsmechanismus, der zu einer blockfesten thermoplastischen bedruckten Folie führt, die sich mit entsprechenden Werkzeugen verformen lässt.
3) Endhärtung der über Druckverfahren aufgebrachten Beschichtung auf der verformten Folie durch aktinische Strahlung, wobei Beständigkeitseigenschaften der Beschichtung erreicht werden, wie sie auch durch herkömmliche Lackierung bereits geformter Gegenstände erzielbar sind.

Die Bereitstellung eines derartigen Verfahrens ist Teil der der vorliegenden Erfindung zugrunde liegende Aufgabe.

Gegenstand der Erfindung ist daher auch ein Verfahren zur Herstellung von verformten bedruckten Folien, bei dem
A) optional eine thermoplastische Folie oder Verbundfolie mit einer oder mehreren farbgebenden Beschichtungsmitteln (Druckfarben) a) bedruckt und anschließend zur Beschichtung a*) getrocknet und/oder gehärtet wird, wobei das Beschichtungsmittel a) und die Trocknungs-/Härtungsbedingungen so gewählt werden, dass die Beschichtung a*) thermoplastisch ist,
B) die gegebenenfalls nach A) bedruckte Folie oder Verbundfolie mit mindestens einem Beschichtungsmittel b) bedruckt wird, welches mit aktinischer Strahlung härtbare Bestandteile enthält,
C) anschließend das Beschichtungsmittel b) ohne Einwirkung aktinischer Strahlung zu einer blockfesten und thermoplastischen Beschichtung b*) getrocknet und/oder gehärtet wird, wobei die Bestandteile des Beschichtungsmittels b) und das enthaltene Bindemittel von ihrem Einfluss auf die Glasübergangstemperatur der im Schritt C) getrockneten bzw. getrockneten und gehärteten Beschichtung b*) so gewählt werden, dass diese mindestens 35°C beträgt,
D) die beschichtete Folie durch thermisches Verformen wie Tiefziehen, Vakuum-Tiefziehen, Pressen, Blasverformen und/oder Hochdruckverformen verformt wird,
E) die Beschichtung b*) durch Einwirkung von aktinischer Strahlung zu einer duromeren Schicht gehärtet wird und
F) optional die Folie mit thermoplastischen Kunststoffen hinterspritzt oder mit ein- oder mehrkomponentigen Kunststoffen hinterschäumt wird.

Optional können die Schritte E) und F) auch in umgekehrter Reihenfolge durchgeführt werden.

Gegenstand der Erfindung sind auch die nach dem erfindungsgemäßen Verfahren in den Schritten A)-E) hergestellten verformten Folien sowie die in den Schritten A)-F) hergestellten Formkörper.

### Schritt A

Die erfindungsgemäß einzusetzende Folie muss neben allgemeinen Beständigkeitsanforderungen vor allem die nötige thermische Verformbarkeit besitzen. Prinzipiell geeignet sind daher thermoplastische Polymere wie ABS, AMMA, ASA, CA, CAB, EP, UF, CF, MF, MPF, PF, PAN, PA, PE, HDPE, LDPE, LLDPE, PC, PET, PMMA, PP, PS, SB, PUR, PVC, RF, SAN, PBT, PPE, POM, PP-EPDM, und UP (Kurzbezeichnungen nach DIN 7728T1) sowie ihre Mischungen, weiterhin Verbundfolien aufgebaut aus zwei oder mehr Schichten dieser Kunststoffe. Allgemein können die erfindungsgemäß einzusetzenden Folien auch verstärkende Fasern oder Gewebe enthalten sofern diese die erwünschte thermoplastische Verformung nicht beeinträchtigen bzw. unmöglichmachen.

Besonders geeignet sind thermoplastische Polyurethane, Polymethylmethacrylat (PMMA) sowie modifizierte Varianten von PMMA, weiterhin PC, ASA, PET, PP, PP-EPDM und ABS.

Die Folie wird bevorzugt in einer Dicke von 50 bis 5000 µm, besonders bevorzugt von 200 bis 2000 µm verwendet. Optional kann das Polymer der Folie Additive und Prozesshilfsmittel zur Folienherstellung enthalten wie z.B. Stabilisatoren, Weichmacher, Füllstoffe wie Fasern und Farbstoffe enthalten. Die zur Beschichtung vorgesehene sowie die andere Seite der Folie kann glatt sein oder eine Oberflächenstruktur aufweisen, wobei eine glatte Oberfläche der zu beschichtenden Seite bevorzugt ist.

Auf der Rückseite der Folie, d.h. auf der Oberfläche, auf der das Beschichtungsmittel nicht aufgebracht wird, kann optional eine thermisch verformbare Klebstoffschicht aufgebracht sein. Hierzu eignen sich je nach Vorgehensweise bevorzugt Schmelzklebstoffe bzw. strahlungshärtende Klebstoffe. Zusätzlich kann auf der Oberfläche der Klebeschicht noch eine Schutzfolie aufgebracht werden, die ebenfalls thermisch verformbar ist. Weiterhin ist es möglich, die Folie rückseitig mit Trägermaterialien wie Geweben auszustatten, die jedoch im gewünschten Maße verformbar sein müssen.

Beschichtungsmittel a) sind beispielsweise Druckfarben, die im getrockneten/gehärteten Zustand a*) thermoplastisch sind und daher beim Verfahrensschritt D) ohne Rissbildung oder Verschlechterung der optischen Eigenschaften mit der Folie verformt werden können. Als Bindemittel für die Druckfarbe sind daher geeignet Nitrocellulose in Kombination mit Weichmachern, thermoplastische Polyurethane, thermoplastische Polyester, thermoplastische Polycarbonate, thermoplastische Poly(meth)acrylate. Bei der Wahl des geeigneten Bindemittels ist dessen Glasübergangstemperatur so zu wählen, dass diese oberhalb der Glasübergangstemperatur der Folie bzw. der der beschichteten Schicht der Verbundfolie liegt, aber trotzdem so tief, dass ein Verformen im Schritt D) problemlos möglich ist. Bei einem einfachen Thermoformen muss die Glasübergangstemperatur von Folie und Beschichtung a*) unterhalb der im Werkzeug beim Thermoformen eingestellten Temperatur liegen. Die Auswahl des Bindemittels für a) kann vom Fachmann daher in einfachen Versuchen für das gewünschte Verformverfahren ermittelt werden.

Geeignete Beschichtungsmittel a) können lösemittelhaltig, lösemittelfrei oder wässrig vorliegen. Neben Bindemitteln können weitere für Druckfarben übliche Bestandteile enthalten sein, beispielsweise Farbstoffe, Effektpigmente, Füllstoffe, Additive, Katalysatoren, Initiatoren und/oder Stabilisatoren. Bevorzugt enthält a) mindestens einen Farbstoff.

Zur Aufbringung von a) auf die Folie kann die Folie gegebenenfalls vorbehandelt werden. Übliche Vorbehandlungen umfassen die Reinigung mit Lösemitteln oder wässrigen Reinigungsmitteln, die Aktivierung mittels Beflämmen, UV-Bestrahlung, Corona-, Plasmabehandlung oder die Behandlung mit ionisiertem Gas wie z.B. ionisierter Luft, um Staubeinfall zu reduzieren.

Besonders geeignete Druckfarben werden beispielsweise in der EP-A 0 688 839 beschrieben.

Besonders geeignete Druckfarben sind beispielsweise von der Fa. Pröll KG, Weißenburg, DE unter der Bezeichnung Noriphan^{®} HTR erhältlich.

Geeignete Druckverfahren zur Aufbringung von a) sind bekannt, prinzipiell sind alle Druckverfahren wie Hochdruck, Tiefdruck, Flexodruck, Offsetdruck, Siebdruck, Tampondruck, Tintenstrahldruck und Laserdruck geeignet. Bevorzugt sind Siebdruck und Laserdruck, besonders bevorzugt ist der Siebdruck.

Im Anschluss an die Bedruckung wird die Beschichtung a) durch übliche Verfahren getrocknet und/oder gehärtet, wobei eine reine Trocknung ohne Härtung (durch chemische Vernetzung) bevorzugt ist.

Zur Erzeugung von mehrfarbig bedruckten Folien ist es möglich mehrere verschiedene Druckfarben aₗ)-aₙ) gleichzeitig z.B. durch Tintenstrahldruck oder Laserdruck oder nacheinander z.B. durch Siebdruck aufzutragen und zu trocknen/härten.

### Schritt B

Zur Aufbringung der Beschichtung b) im Verfahrensschritt B) kann die gegebenenfalls nach A) bedruckte Folie zunächst vorbehandelt werden. Übliche Vorbehandlungen umfassen die Reinigung mit Lösemitteln oder wässrigen Reinigungsmitteln, die Aktivierung mittels Beflämmen, UV-Bestrahlung, Corona-, Plasmabehandlung oder die Behandlung mit ionisiertem Gas wie z.B. ionisierter Luft, um Staubeinfall zu reduzieren.

Die Folie wird dann mit mindestens einem Beschichtungsmittel b) bedruckt, welches mit aktinischer Strahlung härtbare Bestandteile enthält. Das Beschichtungsmittel b) ist dabei so beschaffen, dass es im Schritt C) zu einer blockfesten Beschichtung b*) getrocknet oder getrocknet und gehärtet wird. Die Bestandteile des Beschichtungsmittels b) insbesondere das enthaltene Bindemittel müssen daher von Ihrem Einfluss auf die Glasübergangstemperatur der im Schritt C) getrockneten bzw. getrockneten und gehärteten Beschichtung b*) so gewählt werden, dass diese mindestens 35°C, bevorzugt 40°C oder mehr beträgt. Dabei gilt je höher die Glasübergangstemperatur von b*) desto besser ist die Blockfestigkeit. Gleichzeitig sollte, um eine gute Verformbarkeit im Schritt D) zu gewährleisten, die Glasübergangstemperatur von b*) nicht wesentlich höher, also maximal 10°C, bevorzugt nur 5°C höher als die Glasübergangstemperatur der Folie oder die der obersten Schicht der Verbundfolie liegen.

Unter Trocknung - auch als physikalische Härtung bezeichnet - versteht der Fachmann die Härtung unter Abgabe des Lösemittels bei Zimmertemperatur oder bevorzugt bei erhöhter Temperatur. Dabei bleibt das Molekulargewicht und die chemische Natur der Moleküle des Bindemittels unverändert, allerdings entsteht eine physikalische Vernetzung der Kettenmoleküle untereinander z.B. durch Verschlaufung oder Wasserstoffbrückenbindung, so dass eine trockene, blockfeste Lackoberfläche erhalten werden kann. Im Falle von Dispersionslacken oder Beschichtungsstoffen auf Dispersionsbasis erfolgt die physikalische Härtung durch Koaleszenz der Beschichtungsmittelteilchen wobei ebenfalls bei Zimmertemperatur oder bevorzugt erhöhter Temperatur das Lösemittel, in den meisten Fällen Wasser, abgegeben wird und die Dispersionspartikel zu einer Beschichtung verfließen, die mit vollständiger Abgabe des Lösemittels ebenfalls eine trockene, blockfeste Lackoberfläche ausbilden kann.

Geeignete trocknende, wässrige Beschichtungsmittel b) enthalten mindestens einen mit aktinischer Strahlung härtbaren Bestandteil als Bindemittel. Geeignete Bindemittel sind UV-härtende Polurethandispersionen, UV-härtende Polyacrylatdispersionen sowie deren Kombinationen untereinander und mit UV-härtenden Monomeren, weiterhin geeignet sind Kombinationen von UV-härtenden Polyurethandispersionen mit Polyacrylatdispersionen.

Geeignete kommerzielle Bindemittel sind beispielsweise erhältlich unter der Bezeichnung Lux^{®} von Alberdingk & Boley GmbH, Krefeld, DE, insbesondere die Produkte Lux 1613, 241, 285, 331, 460, 480; weiterhin Laromer^{®} von BASF AG, Ludwigshafen, DE, insbesondere die Produkte LR 8949, 8983, 9005; weiterhin Bayhydrol^{®} UV von Bayer MaterialScience AG, Leverkusen, DE, insbesondere Bayhydrol^{®} UV 2282, VP LS 2317, VP LS 2280 und XP 2629; weiterhin Ucecoat^{®} von Cytec Surface Specialities SA/NV, Brüssel, BE, insbesondere Ucecoat^{®} 7571, 7770, 7772, 7773, 7825 und 7849.

Die Herstellung von UV-härtenden Dispersionen mit physikalischer Antrocknung vor einer UV-Härtung wird z.B. in den Patentanmeldungen EP-A 0 753 531 sowie EP-A 0 942 022 beschrieben.

Geeignete lösemittelhaltige Beschichtungsmittel b) enthalten mit aktinischer Strahlung härtbare Bindemittel. Als Bestandteile der Bindemittel eignen sich beispielsweise Urethan(meth)acrylate, Polyester(meth)acrylate, Epoxy(meth)acrylate und (meth)acrylierte Polymerisate wie Polyacrylate. Geeignete Produkte besitzen den oben geschilderten Einfluss auf die Glasübergangstemperatur. Bevorzugt sind Urethan(meth)acrylate.

Die Herstellung von geeigneten Urethan(meth)acrylaten mit hohen Glasübergangstemperaturen wird beispielsweise in den Patentanmeldungen EP-A 1 448 735 sowie EP-A 1 541 649 ausführlich beschrieben. EP-A 1 448 735 beschreibt dabei die Herstellung von Urethan(meth)acrylaten geeigneter Glasübergangstemperaturen und geringer Schmelzviskosität und ihre Verwendung in Pulverlacken. Diese Produkte können in geeigneten organischen Lösungsmitteln gelöst als Bindemittel für geeignete Beschichtungsmittel b) eingesetzt werden. Weitere Produkte sind die in WO 2005/080484, WO 2005/099943, WO 2005/118689, WO 2006/048109 genannten Urethanacrylate.

Geeignete Polyester(meth)acrylate sind bekannt. Insbesondere Produkte, die als Bindemittel für UV-härtende Pulverlacke kommerziell angeboten werden, sind in organischen Lösemitteln gelöst geeignet, beispielsweise Uvecoat^{®} 2300 und 3003 von Cytec Surface Specialities BV/NV, Brüssel, BE.

Geeignete (meth)acrylierte Polymerisate von vinylischen Monomeren sind ebenfalls bekannt. Besonders geeignet sind Produkte mit einer Glasübergangstemperatur oberhalb von 40 °C. Beipsielsweise Ebecryl^{®} 1200 von Cytec Surface Specialities BV/NV, Brüssel, BE.

Neben der reinen physikalischen Trocknung kann die Beschichtung b) im Schritt C) bevorzugt physikalisch getrocknet und zusätzlich zu b*) gehärtet werden.

Unter chemischer Härtung versteht der Fachmann die Härtung durch chemische Vernetzung von im Beschichtungsmittel enthaltenen Molekülen bei Raumtemperatur oder erhöhter Temperatur. Bevorzugt erfolgt die Härtung durch Polyaddition.

Wird die Beschichtung b) neben der physikalischen Trocknung zusätzlich noch chemisch gehärtet, ist darauf zu achten, dass die Vernetzungsdichte in b*) nicht zu hoch ist, da ansonsten die Verformbarkeit von b*) im Schritt D) zu gering ist. Es ist daher bevorzugt, durch die chemische Härtung im wesentlichen hochmolekulare Ketten aufzubauen. Entsprechend sind die Komponenten und/oder ihre Anteile in b) so zu wählen, dass im Sinne der Verformung D) nur eine geringe Vernetzung bei der Härtung C) stattfindet.

Das chemisch härtbare Beschichtungsmittel b) kann sowohl 100%ig, fest oder flüssig, in organischen Lösemitteln gelöst als auch in wässriger Phase gelöst und/oder emulgiert zum Einsatz kommen.

Das Beschichtungsmittel b) enthält daher:
1) Eine oder mehrere Verbindungen, die mindestens eine zur Polyaddition mit Komponente 2) geeignete chemische Funktion I) enthalten, die
   1.1) keine ethylenisch ungesättigte Doppelbindungen enthalten und/oder
   1.2) ethylenisch ungesättigte Doppelbindungen enthalten
2) Eine oder mehrere Verbindungen, die mindestens eine zur Polyaddition mit Komponente 1) geeignete und von I) verschiedene chemische Funktion II) enthalten, die
   2.1) keine ethylenisch ungesättigten Doppelbindungen enthalten und/oder
   2.2) ethylenisch ungesättigte Doppelbindungen enthalten
   und optional:
3) ethylenisch ungesättigten Verbindungen, die keine zur Polyaddition geeignete chemische Funktionen aufweisen
4) Fotoinitiatoren
5) Farbmittel, Pigmente, Additive wie Stabilisatoren, Katalysatoren und andere Hilfs- und Zusatzstoffe sowie Lösungsmittel
6) Nichtfunktionelle Polymere und/oder Füllstoffe,
wobei mindestens eine der Komponenten 1-3) ethylenisch ungesättigte Gruppen aufweist.

Der Gehalt an ethylenisch ungesättigten Gruppen hat wesentlichen Einfluss auf die erreichbaren Beständigkeitseigenschaften der mit Strahlung gehärteten Beschichtung. Daher ist es bevorzugt mindestens einen Gehalt an 0,5 mol ethylenisch ungesättigten Gruppen pro kg Festgehalt des Beschichtungsmittels einzusetzen. Besonders resistente Systeme enthalten mindestens 1,0 mol, insbesondere mindestens 1,5 mol pro kg.

Geeignete chemische Funktionen I) und II) für die Polyaddition sind prinzipiell alle in der Beschichtungstechnologie üblicherweise verwendeten Funktionen. Insbesondere geeignet sind Isocyanat-Hydroxyl, Thiol, Amin und/oder Urethan, Carboxylat-Epoxid, Melamin-Hydrxoxyl, und Carbamat-Hydroxyl. Weiterhin geeignet sind Carbodiimide und/oder Polyaziridine zusammen mit entsprechend reaktiven Funktionen. Als Funktion I) sind ganz besonders bevorzugt Isocyanate sowie als Funktion II) Hydroxyl, primäre und/oder sekundäre Amine sowie Asparaginat.

Als Isocyanate I) werden aromatische, araliphatische, aliphatische und cycloaliphatische Di- oder Polyisocyanate verwendet. Es können auch Mischungen solcher Di- oder Polyisocyanate eingesetzt werden. Beispiele geeigneter Di- oder Polyisocyanate sind Butylendiisocyanat, Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4" -triisocyanat oder deren Derivate mit Urethan-, Hartstoff , Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Bevorzugt sind die oligomeren Isocyanurate, Uretdione, Allophanate und Iminooxadiazindione des HDI, des IPDI und/oder der isomeren Bis(4,4'-isocyanatocyclohexyl)methane sowie deren Mischungen. Besonders bevorzugt sind die oligomeren Isocyanurate, Uretdione und Allophanate des IPDI sowie die oligomeren Isocyanurate der isomeren Bis(4,4'-isocyanatocyctohexyl)methane.

Es ist auch möglich, die vorgenannten Isocyanate I) teilweise mit isocyanat-reaktiven ethylenisch ungesättigten Verbindungen umgesetzt zu verwenden. Bevorzugt werden hierzu α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe. Als hydroxyfunktionelle Acrylate oder Methacrylate kommen beispielsweise Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(e-caprolacton)mono(meth)acrylate, wie z.B. Tone^{®} M100 (Dow, USA), 2-Hydroxypropyl(meth)acrylat, 4-Hydroxybutyl(meth)-acrylat, 3-Hydroxy-2,2-dimethylpropyl(meth)acrylat, die hydroxyfunktionellen Mono-, Di- oder Tetra(meth)acrylate mehrwertiger. Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische in Betracht. Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet.

Die Umsetzung der Isocyanate mit den isocyanatreaktiven Komponenten kann nach bekannten Verfahren unter Urethanisierung und/oder Allophanatisierung erfolgen.

Als Verbindungen der Komponente 1.1) können alle vorgenannten Di- oder Polyisocyanate 1) einzeln oder in beliebigen Mischungen verwendet werden, die keine ethylenisch ungesättigten Funktionen aufweisen.

Als Verbindungen der Komponente 1.2) können alle vorgenannten Verbindungen 1) einzeln oder in beliebigen Mischungen verwendet werden, die mindestens eine Isocyanatgruppe aufweist und zusätzlich mindestens eine ethylenisch ungesättigte Funktion aufweist, die unter Einwirkung aktinischer Strahlung mit ethylenisch ungesättigten Verbindungen unter Polymerisation reagiert.

Zur Erzielung einer guten physikalischen Trocknung neben der Härtung im Schritt C) ist es bevorzugt, dass die Komponente 1) einen hohen Anteil an aromatischen und/oder cycloaliphatischen Struktureinheiten, besonders bevorzugt an cycloaliphatischen Struktureinheiten enthält, was sich insbesondere durch Wahl der entsprechenden Isocyanatverbindungen erzielen lässt.

Isocyanat-reaktive Verbindungen 2) sind monomere, oligomere oder polymere Verbindungen sowie Mischungen einer oder mehrerer dieser Verbindungen.

Geeignete Verbindungen der Komponente 2) sind niedermolekulare kurzkettige, d.h. 2 bis 20 Kohlenstoffatome enthaltende aliphatische, araliphatische oder cycloaliphatische Diole, Triole und/oder höhere Polyole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit. Bevorzugt sind aliphatische Diole, ganz besonders bevorzugt cycloaliphatische Diole.

Geeignet sind auch höhermolekulare aliphatische und cycloaliphatische Polyole wie Polyesterpolyole, Polyetherpolyole, Polycarbonatpolyole, hydroxyfunktionelle Acrylharze, hydroxyfunktionelle Polyurethane, hydroxyfunktionelle Epoxyharze oder entsprechende Hybride (vgl. Römpp Lexikon Chemie, S.465-466, 10. Aufl. 1998, Georg-Thieme-Verlag, Stuttgart). Bevorzugt sind (cyclo)aliphatische Polyesterpolyole und/oder (cyclo)aliphatische Polycarbonatpolyole, ganz besonders bevorzugt sind solche Polyester- und/oder Polycarbonatpolyole, die verzweigt linear aliphatische Diole enthalten.

Weiterhin können als Verbindungen der Komponente 2) alle Verbindungen einzeln oder in beliebigen Mischungen verwendet werden, die mindestens eine gegenüber Isocyanaten reaktive Gruppe und mindestens eine ungesättigte Funktion aufweisen, die unter Einwirkung aktinischer Strahlung mit ethylenisch ungesättigten Verbindungen unter Polymerisation reagiert.

Bevorzugt werden α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe.

Als hydroxyfunktionelle Acrylate oder Methacrylate kommen beispielsweise in Betracht Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische.

Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet.

Die Herstellung von Polyesteracrylaten wird in der DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 - 135 beschrieben.

Ebenfalls verwendet werden können die an sich bekannten hydroxylgruppenhaltigen Epoxy(meth)-acrylate mit OH-Gehalten von 20 bis 300 mg KOH/g oder hydroxylgruppenhaltige Polyurethan-(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)-acrylaten oder Mischungen hydroxylgruppenhaltiger ungesättigter Polyester mit Polyester(meth)-acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S 37 - 56 beschrieben. Bevorzugt sind Polyesteracrylate mit definierter Hydroxyfunktionalität.

Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten. Bevorzugt sind weiterhin Epoxyacrylate mit definierter Funktionalität wie sie aus der Umsetzung einer ggf. ungesättigten Disäure wie Fumarsäure, Maleinsäure, Hexahydrophthalsäure oder Adipinsäure und Glycidyl(meth)acrylat. Aliphatische Epoxyacrylate sind besonders bevorzugt. Acrylierte Polyacrylate können beispielsweise durch Umsetzung von glycidylfunktionellen Polyacrylaten mit (Meth)acrylsäure hergestellt werden.

Als Verbindungen der Komponente 2.1) können alle vorgenannten Isocyanat-reaktiven Verbindungen 2) einzeln oder in beliebigen Mischungen verwendet werden, die keine ethylenisch ungesättigten Funktionen aufweisen.

Als Verbindungen der Komponente 2.2) können alle vorgenannten Verbindungen 2) einzeln oder in beliebigen Mischungen verwendet werden, die mindestens eine Isocyanat-reaktive Gruppe aufweisen und zusätzlich mindestens eine ethylenisch ungesättigte Funktion aufweisen, die unter Einwirkung aktinischer Strahlung mit ethylenisch ungesättigten Verbindungen unter Polymerisation reagiert.

Als optionale Komponente 3) können die oben genannten Verbindungen, die bei rein physikalisch trocknenden Beschichtungsmitteln b) zum Einsatz kommen können, verwendet werden. In untergeordneter Menge, d.h. nur in solchen Mengen die die Blockfestigkeit nach der Trocknung C) nicht zu stark negativ beeinflussen können auch andere monomere oder polymere Verbindungen, die mindestens eine funktionelle Gruppen tragen, die durch Einwirkung aktinischer Strahlung mit ethylenisch ungesättigten Verbindungen unter Polymerisation reagieren und die weder IsocyanatGruppen noch Isocyanat-reaktive Gruppen aufweisen.

Geeignet sind α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Vinylether, Acrylate und Methacrylate, besonders bevorzugt sind Acrylate. Beispiele beinhalten die in der Technologie der Strahlenhärtung bekannten Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, Melaminacrylate, Silikonacrylate, Polycarbonatacrylate und acrylierte Polyacrylate.

Geeignete Ester werden üblicherweise durch Veresterung von Alkoholen mit 2 bis 20 Kohlenstoffatomen, bevorzugt mehrwertigen Alkoholen mit 2 bis 20 Kohlenstoffatomen, mit ungesättigten Säuren oder ungesättigten Säurechloriden erhalten, bevorzugt Acrylsäure und deren Derivate. Dazu können die dem Fachmann bekannten Methoden der Veresterung angewendet werden.

Geeignete Alkoholkomponenten bei der Veresterung sind einwertige Alkohole wie die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Ebenfalls geeigne sind Zweiwertige Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol, 1,4-Cyclohexandiol, 1,4-Cyclohexandimethanol und Tripropylenglykol. Geeignete höherwertige Alkohole sind Glycerin, Trimethylolpropan, Ditrimethylolpropan, Pentaerythrit oder Dipentaerythrit. Bevorzugt sind Diole und höherwertige Alkohole, besonders bevorzugt sind Glycerin, Trimethylolpropan, Pentaerythrit, Dipentaerythrit und 1,4-Cyclohexandimethanol.

Fotoinitiatoren 4) sind durch aktinische Strahlung aktivierbare Initiatoren, die eine radikalische Polymerisation der entsprechenden polymerisierbaren Gruppen auslösen. Fotoinitiatoren sind an sich bekannte, kommerziell vertriebene Verbindungen, wobei zwischen unimolekularen (Typ I) und bimolekularen (Typ II) Initiatoren unterschieden wird. (Typ I)-Systeme sind z.B. aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Es kann vorteilhaft sein auch Gemische dieser Verbindungen einzusetzen. Je nach zur Härtung verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Als Komponente 5) können in der Technologie der Lacke, Farben, Druckfarben, Dichtstoffe und Klebstoffe übliche Zusätze und/oder Hilfs- und/oder Lösemittel enthalten sein.

Insbesondere sind dies Stabilisatoren, Lichtschutzmittel wie UV-Absorber und sterisch gehinderte Amine (HALS), weiterhin Antioxidantien sowie Lackhilfsmittel, z.B. Antiabsetzmittel, Entschäumungs- und/oder Netzmittel, Verlaufmittel, Weichmacher, Katalysatoren, Hilfslösemittel und/oder Verdicker sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996.

Geeignete Lösungsmittel sind abgestimmt auf die verwendeten Bindemittel sowie das Druckverfahren Wasser und/oder andere gängige Lösungsmittel aus der Drucktechnik. Beispiele sind Aceton, Ethylacetat, Butylacetat, Methoxyproylacetat, Glykole, Wasser, Xylol oder Solventnaphtha der Fa. Exxon-Chemie als aromatenhaltiges Lösemittel sowie Gemische der genannten Lösemittel.

Als Komponente 6) können unfunktionelle Polymere und Füllstoffe zur Einstellung der mechanischen und optischen Eigenschaften enthalten sein. Hierzu eignen sich alle Polymere und Füllstoffe, die mit dem Beschichtungsmittel verträglich und mischbar sind. Die Verbindungen der Komponente 6) können sowohl als Bulkmaterial als auch in Form von Partikeln mit mittleren Durchmessern im Bereich zwischen einem und 10000 Nanometern, bevorzugt im Bereich von einem bis 500 Nanometern, besonders bevorzugt im Bereich von zwei bis 200 Nanometern, eingesetzt werden.

Als Polymere Zusatzstoffe kommen Polymere wie beispielsweise Polyacrylate, Polycarbonate, Polyurethane, Polyolefine, Polyether, Polyester, Polyamide und Polyharnstoffe in Frage.

Als Füllstoffe können mineralische Füllstoffe, Glasfasern und/oder metallische Füllstoffe, wie sie in gängigen Vorgehensweisen für sog. Metalliclackierungen zum Einsatz kommen, verwendet werden.

Geeignete Druckverfahren zur Aufbringung von b) sind bekannt, prinzipiell sind alle Druckverfahren wie Hochdruck, Tiefdruck, Flexodruck, Offsetdruck, Siebdruck, Tampondruck, Digitaldruck wie Tintenstrahldruck und Laserdruck. Bevorzugt sind Siebdruck und Laserdruck, besonders bevorzugt ist der Siebdruck. Die Druckfarbe b) kann je nach Druckverfahren durch Zusatz von Lösungsmitteln oder Auswahl entsprechender Additive für das Druckverfahren nach an sich bekannten Vorgehensweisen angepasst werden.

Das Druckverfahren selbst bietet keine methodischen Besonderheiten, außer dass die Druckfarbe vor Einfall von intensiver Strahlung (Licht, UV-Licht), die eine Polymerisation der ethylenisch ungesättigten Gruppen auslösen kann, geschützt werden muss.

Das Aufbringen der Beschichtung b) durch ein Druckverfahren bietet den besonderen Vorteil, dass die Folie nicht notwendigerweise vollflächig bedruckt werden muss, sondern nur an den Stellen, an denen gemäß späterer Verwendung die Beschichtung gewünscht wird.

Je nach Größe der Folie und der Größe des gewünschten Druckbildes ist es möglich mehrere Druckbilder so genannte Nutzen auf ein Druckformat parallel aufzutragen und entsprechend weiterzuverarbeiten.

### Schritt C) Trocknung/Härtung

Nach dem Bedrucken wird vorhandenes Lösungsmittel und/oder Wasser nach gängigen Methoden entfernt. Hierzu wird insbesondere mit erhöhten Temperaturen in Öfen und mit bewegter Luft (Konvektionsöfen, Düsentrockner) sowie Wärmestrahlung (IR, NIR) gearbeitet Es ist sorgfältig darauf zu achten, dass durch die erhöhte Temperatur und/oder die Wärmestrahlung keine Polymerisation (Vernetzung) der ethylenisch ungesättigten Gruppen in b) ausgelöst wird, da dieses die Verformbarkeit beeinträchtigt. Weiterhin ist die maximal erreichte Temperatur so niedrig zu wählen, dass sich die Folie oder Verbundfolie nicht unkontrolliert verformt.

Nach dem Trocknungs-/Härtungsschritt kann die bedruckte Folie ggf. aufgerollt werden, ohne dass es zum Verkleben der Beschichtung b*) mit der Rückseite der Substratfolie kommt. Es ist aber auch möglich die beschichtete Folie zuzuschneiden und die Zuschnitte einzeln oder als Stapel der Weiterverarbeitung zuzuführen.

### Schritt D) Verformen

Die bedruckte Folie wird durch thermisches Verformen in die gewünschte Endform gebracht werden. Dies kann nach gängigen Verfahren wie Tiefziehen, Vakuum-Tiefziehen, Pressen, Blasverformen erfolgen (s. Lechner (Hrsg.) Makromolekulare Chemie, S. 384 ff., Verlag Birkenhäuser, Basel, 1993) sowie - bevorzugt - nach Hochdruckverformverfahren wie sie beispielhaft in der EP-A 0 371 425 beschrieben sind. Bei letzterem erfolgt die Verformung unter höheren Drücken oberhalb 20 bar, bevorzugt oberhalb 50 bar. Der anzuwendende Druck wird insbesondere von der Dicke der zu verformenden Folie und der Temperatur, sowie dem verwendeten Folienmaterial bestimmt. Er ist ggf. in einfachen Vorversuchen zu ermitteln.

Es ist beim Hochdruckverformverfahren besonders vorteilhaft, dass man unterhalb der Erweichungstemperatur des Folienmaterials arbeiten kann, bevorzugt mindestens 20 °C, besonders bevorzugt mindestens 30 °C unterhalb der Erweichungstemperatur. Diese "Kalt"verformung hat den Vorteil, dass dünnere Folien, die zu exakterer Ausformung führen, verwendet werden können. Ein weiterer Vorteil sind kürzere Taktzeiten sowie eine geringere thermische Belastung der Beschichtung b*).

### Schritt E) Härtung mit Strahlung

Nach dem Verformungsschritt wird die Beschichtung b*) der Folie durch Bestrahlung mit aktinischer Strahlung endgehärtet.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den oben beschriebenen Fotoinitiatoren freigesetzt werden.

Die Strahlungshärtung erfolgt bevorzugt durch Einwirkung energiereicher Strahlung, also UV-Strahlung oder Tageslicht, z.B. Licht der Wellenlänge 200 bis 750 nm, oder durch Bestrahlen mit energiereichen Elektronen (Elektronenstrahlung, 90 bis 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur neigen zur unkontrollierten Verformung, wenn durch die Bestrahlung eine bestimmte Temperatur überschritten wird. In diesen Fällen ist es vorteilhaft, durch geeignete Filter oder Bauart der Strahler möglicht wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft unter inerten oder sauerstoffreduzierten Bedingungen zu härten, da bei Reduktion des Sauerstoffanteils in der Atmosphäre oberhalb von b*) die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von 0,1 bis 10, besonders bevorzugt 0,2 bis 3,0 Gew.-% bezogen auf den Festkörper der Beschichtung eingesetzt. Zur Härtung dieser Beschichtungen wird bevorzugt eine Dosis von 500 bis 4000 mJ/cm2, gemessen im Wellenlängebereich von 200 bis 600 nm, verwendet.

Die resultierende bedruckte, verformte Folie zeigt sehr gute Beständigkeiten gegenüber Lösungsmittel, färbenden Flüssigkeiten wie sie im Haushalt vorkommen sowie gute Kratz- und Abriebbeständigkeiten. Insgesamt ist sie den Eigenschaften nicht vernetzter bedruckter Folien, wie sie z.B. durch Bedruckung mit Siebdruckfarben nach EP-A 0 688 839 erhalten werden können, überlegen.

### Schritt F: Hnterspritzen, Hinterschäumen

Die verformte beschichtete Folie kann vor oder nach der Endhärtung durch Hinterspritzen oder auch Hinterschäumen mit gegebenenfalls gefüllten Polymeren wie Thermoplasten oder auch reaktiven Polymeren wie zwei Komponenten Polyurethansystemen modifiziert werden. Dabei kann ggf. eine Klebschicht als Haftvermittler eingesetzt werden. Dazu werden an sich bekannte geeignete Werkzeuge verwendet.

Die nach dem erfindungsgemäßen Verfahren in den Schritten A)-E) hergestellten Folien sowie die nach dem erfindungsgemäßen Verfahren in den Schritten A)-F) hergestellten Formkörper sind wertvolle Materialien zur Herstellung von Gebrauchsgegenständen. Gegenstand der Erfindung ist daher auch die Verwendung der Folie sowie der Formkörper bei der Herstellung von Fahrzeuganbauteilen, Kunststoffteilen wie Blenden für den Fahrzeug(innen)bau und/oder Flugzeug(innen)bau, Möbelbau, elektronischen Geräten, Kommunikationsgeräten, Gehäusen und dekorativen Gegenständen. Gegenstand der Erfindung sind daher auch die unter Verwendung der Folie oder der Formkörper hergestellten Gebrauchsgegenstände.

### Beispiele

Säurezahl: Angabe mg KOH / g Probe, Titration mit 0,1 mol/l NaOH-Lösung gegen Bromthymolblau (ethanolische Lösung), Farbumschlag von gelb über grün nach blau, Grundlage DIN 3682.

Hydroxylzahl: Angabe in mg KOH / g Probe, Titration mit 0,1 mol/l meth. KOH-Lösung nach kalter Acetylierung mit Essigsäureanhydrid unter Katalyse von Dimethylaminopyridin, Grundlage DIN 53240.

Isocyanatgehalt: Angabe in %, Rücktitration mit 0,1 mol/l Salzsäure nach Reaktion mit Butylamin, Grundlage DIN EN ISO 11909.

Gelpermeationschromatographie (GPC): Elutionsmittel THF, RI-Detektion, Integration nach Eichung mit Polystyrolstandards.

Viskositäten: Rotationsviskosimeter (Fa. Haake, Typ VT 550), Messungen bei 23°C und Schergefälle - soweit nicht anders vermerkt - D 1/40 s⁻¹.

Wenn nicht anderweitig vermerkt, handelt es sich bei %-Angaben um Gew.-%.

### Komponenten eines Beschichtungsmittels

### Beispiel 1: Herstellung eines Isocyanatoacrylats

9000 g 4,4'-(2,4'-)Diisocyanatodicyclohexylmethan wurden in einem Planschliffgefäß mit Rührer, Rückflusskühler, Stickstoffüberteitung, Innenthermometer und Tropftrichter unter Stickstoff vorgelegt. Anschließend wurde auf 60°C erwärmt und 28,0 g einer 5 %igen Lösung von Trimethylbenzylammoniumhydroxid, gelöst in n-Butanol/Methanol = 12:1, langsam zudosiert, wobei die Temperatur so lange zwischen 60 und 80°C gehalten wurde, bis der NCO-Gehalt der Rohlösung zwischen 25,5 und 25,8 % lag. Anschließend wurden 21,0 g einer 5 %igen Lösung von Dibutylphosphat in 4,4'-(2,4'-)Diisocyanatodicyclohexylmethan zugegeben, abgekühlt und mit 450 g eines handelsüblichen Isocyanuratpolyisocyanats auf Basis von Diisocyanatohexan (HDI) (NCO = 21,8 %, Viskosität = 3000 mPas/23°C, monomeres HDI = 0,1 %) versetzt und bei 200°C/0,15 mbar durch Dünnschichtdestillation monomeres 4,4'-(2,4'-)Diisocyanatodicyclohexylmethan abgetrennt. 1894,52 g des so erhaltenen Festharzes (NCO = 15,0 %) wurden entnommen und in einem weiteren Mehrhalskolben mit Rückflusskühler, Tropftrichter, Innenthermometer, Rührer und Luftdurchleitung (6 L/h) zusammen mit 975,00 g Butylacetat, 3,176 g Dibutylzinndilaurat und 3,18 g 2,6-Di-tert.butyl-4-methylphenol vorgelegt und unter Rühren auf 60°C aufgeheizt. 374,12 g Hydroxyethylacrylat wurden anschließend langsam zugetropft, wobei eine maximale Temperatur von 65°C erreicht wurde. Danach wurde das Reaktionsgemisch so lange bei 60°C gerührt, bis ein NCO-Gehalt ≤ 4,4 % erreicht wurde.

Kennzahlen nach 24 h Lagerung bei RT:

| | Viskosität | Festgehalt | NCO-Gehalt | Farbzahl (APHA) |
|---|---|---|---|---|
| Beispiel 1 | 7.200 mPas | 75,3 % | 4,2 % | 22 |

### Beispiel 2: Herstellung eines Epoxyacrylats

In einem Mehrhalskolben mit Destillationsbrücke, Rührer und Stickstoffdurchleitung (6 L/h) wurden 2700,06 g Adipinsäure und 499,54 g Butandiol bei RT vorgelegt und unter Rühren auf 180°C erwärmt bis eine Säurezahl von ≤ 484 erreicht wurde. 2251,88 g dieses Vorproduktes wurden in einem weiteren Mehrhalskolben mit Rückflusskühler, Innenthermometer und Luftdurchleitung (6 L/h) zusammen mit 2735,94 g Glycidylmethacrylat, 9,98 g Triphenylphosphin und 4,99 g 2,6-Ditert.butyl-4-methylphenol bei RT vorgelegt und langsam unter Rühren auf 80°C aufgeheizt und so lange bei dieser Temperatur gehalten, bis die Säurezahl konstant ≤ 20 war.

Kennzahlen nach 24 h Lagerung bei RT:

| | Viskosität | Hydroxylzahl | Säurezahl | Farbzahl (APHA) |
|---|---|---|---|---|
| **Beispiel 2** | 2.900 mPas | 216 | 20,5 | 114 |

### Beispiel 3: Herstellung eines Polycarbonatdiols auf Basis 3-Methy-1,5-Pentandiol

In einem 60 1 Druckreaktor mit Destillationsaufsatz, Rührer und Vorlage wurden 34092 g 3-Methyl-1,5-Pentandiol mit 8,0 g Ytterbium(III)acetylacetonat sowie 10223 g Dimethylcarbonat bei 80°C vorgelegt. Anschließend wurde unter Stickstoffatmosphäre das Reaktionsgemisch in 2 h auf 150°C aufgeheizt und dort unter Rühren und Rückfluss 2 h gehalten wobei der Druck auf 3,9 bar (absolut) anstieg. Danach wurden das Spaltprodukt Methanol im Gemisch mit Dimethylcarbonat per Destillation entfernt, wobei der Druck innerhalb von 4h kontinuierlich um insgesamt 2,2 bar gesenkt wurde. Anschließend wurde der Destillationsvorgang beendet und weitere 10223 g Dimethylcarbonat bei 150°C zu dem Reaktionsgemisch zugepumpt und dort unter Rühren und Rückfluss 2 h gehalten, wobei der Druck auf 3,9 bar (absolut) anstieg. Danach wurde erneut das Spaltprodukt Methanol im Gemisch mit Dimethylcarbonat per Destillation entfernt, wobei der Druck innerhalb von 4 h kontinuierlich um insgesamt 2,2 bar gesenkt wurde. Anschließend wurde der Destillationsvorgang beendet und weitere 7147 g Dimethylcarbonat bei 150°C, zu dem Reaktionsgemisch zugepumpt und dort unter Rühren und Rückfluss 2 h gehalten, wobei der Druck auf 3,5 bar (absolut) anstieg. Danach wurde erneut das Spaltprodukt Methanol im Gemisch mit Dimethylcarbonat per Destillation entfernt, wobei der Druck innerhalb von 4 h auf Normaldruck gesenkt wurde. Im Anschluss daran wurde das Reaktionsgemisch innerhalb von 2 h auf 180°C erhitzt und bei dieser Temperatur 2 h unter Rühren gehalten. Daran anschließend wurde die Temperatur auf 130°C reduziert und ein Stickstoffstrom (51/h) durch das Reaktionsgemisch hindurchgeleitet, während der Druck auf 20 mbar abgesenkt wurde. Danach wurde die Temperatur binnen 4 h auf 180°C erhöht und dort 6 h gehalten. Dabei erfolgte die weitere Entfernung von Methanol im Gemisch mit Dimethylcarbonat aus dem Reaktionsgemisch.

Nach Belüftung und Abkühlung des Reaktionsansatzes auf Raumtemperatur, erhielt man ein farbloses, flüssiges Oligocarbonatdiol mit folgenden Kennzahlen:

| | Viskosität | Hydroxylzahl | Zahlenmittleres Molgewicht Mₙ |
|---|---|---|---|
| **Beispiel 3** | 175 mPas bei D 16 1/s⁻¹ | 173 | 650 |

### Beispiel 4: Herstellung einer UV-härtenden Polyurethandispersion

In einem Reaktionsgefäß mit Rührer, Innenthermometer und Gaseinleitung (Luftstrom 11/h) wurden 210,3 g des hydroxyfunktionellen Polyesteracrylats Laromer^{®} PE44F (BASF AG, Ludwigshafen, DE), 701,3 g des C4-Polyethers Terathane^{®} 2000 (Invista, Wichita, US), 43,6 g Dimethylolpropionsäure, 0,7 g Dibutylzinndilaurat, 390,0 g Aceton vorgelegt, mit einem Gemisch von 157,0 g Desmodur^{®} W (cycloaliphatisches Diisocyanat; Bayer MaterialScience AG, Leverkusen, DE) und 80,3 g Desmodur^{®} H (aliphatisches Diisocyanat; Bayer MaterialScience AG, Leverkusen, DE) versetzt und derart aufgeheizt, dass ein konstanter Aceton-Rückfluss herrschte. Es wurde solange bei dieser Temperatur gerührt, bis die Reaktionsmischung einen NCO-Gehalt von 1,6 ± 0,1 Gew. % enthielt.

Dann wurde auf 40°C abgekühlt, und es wurden 33,6 g Ethyldiisopropylamin zugegeben. Nach 5 min Rühren bei 40°C wurde die Reaktionsmischung unter schnellem Rühren in 2250 g Wasser von 20°C gegossen. Anschließend wurden 42,6 g Isophorondiamin in 125,0 g Wasser zugefügt. Nach 30 min Nachrühren ohne Heizen oder Kühlen wurde das Produkt im Vakuum (50 mbar, max. 50°C) destilliert, bis ein Festkörper von 35 ± 1 Gew.% erreicht wurde. Die Dispersion hat einen pH-Wert von 8,3 und eine mittlere Teilchengröße von 100 nm (Laser-Korrelations-Spektroskopie-Messung: Zetasizer 1000, Malvern Instruments, Malvern, UK). Auslaufzeit in einem 4 mm Becher: 18 s.

### Beispiel 5: Formulierung einer lösemittelhaltigen Dual-Cure Siebdruckfarbe

Als Komponente A) wurden 68,7 g des Isocyanatoacrylates aus Beispiel 1 und 4,0 g des Isocyanatoacrylats Desmolux^{®} XP 2510 (90%ig in Butylacetat, NCO-Gehalt 7,0 %, Molekulargewicht Mn ca. 1200 g/mol, Viskosität 15000 mPas, D 40 1/s, 23 °C; Bayer MaterialScience AG, Leverkusen, DE) vermischt. Als Komponente B) wurden 11,0 g des Carbonatdiols aus Beispiel 3, 8,9 g des Epoxyacrylats aus Beispiel 2, 6,4 g einer 50%igen Lösung des Photoinitiators Irgacure^{®} 184 (Ciba Speciality Chemicals, Basel, CH) in Butylacetat, 0,7 g Verlaufs- und Benetzungsadditiv Byk^{®} 306 (Byk-Chemie, Wesel, DE) und 0,3 g Dibutylzinndilaurat homogen miteinander vermischt. Die Komponenten A) und B) wurden unmittelbar vor dem Bedrucken miteinander im Verhältnis 1:1 Miteinander vermischt. Zur Anpassung der Viskosität wurden zu 100 Teilen der Mischung 28 Teile Butylacetat gegeben.

### Beispiel 6: Formulierung einer wässrigen physikalisch trocknenden und UV-härtenden Siebdruckfarbe

Unter einem Dissolver wurden 95,3 g der Dispersion aus Beispiel 4 mit 2,0 g Acematt^{®} 3200 und 2,0 g Acematt^{®} 3300 (Mattierungsmittel, Degussa, Düsseldorf, DE) 5 min bei 2000 U/min dispergiert. Anschließend wurden nacheinander bei 500 U/min eingearbeitet: 0,3 g Irgacure® 500 (Photoinitiator, Ciba Speciality Chemicals, Basel, CH), 0,2 g Dehydran 1293 (Entschäumer, Cognis GmbH & CoKG, Düsseldorf, DE), 0,2 g Byk® 348 (Verlaufs- und Benetzungsadditiv, Byk-Chemie, Wesel, DE). Nach Zugabe jedes Additvs wurde jeweils 5 min gerührt.

### Beispiel 7: Herstellung bedruckter und verformter Folien

### Herstellung von bedruckten Kunststofffolien

ABS und PC-Kunststofffolien (Bayfol^{®} DFA und Makrofol^{®} DE1-1) wurden als Bogenware (sowohl unbelassen als auch mit einer physikalisch trocknenden, silbermetallic Siebdruckfarbe Noriphan HTR [Pröll KG, Weißenburg, DE] nach Angaben des Herstellers im Siebdruckverfahren bedruckt und getrocknet) im Siebdruckverfahren mit den Druckfarben nach Beispiel 5 und 6 mit folgenden Druckparametern beschichtet:
Halbautomatische Siebdruckmaschine; Hersteller ESC (Europa Siebdruck Centrum); Gewebe 80 THT Polyester; RKS-Rakel; Trockenfilm-Schichtdicke: 10-12 µm.

### Vortrocknung/Vorvernetzung

Ein Teil der beschichteten Kunststoffbögen wurden 30 Minuten im Kammerofen bei 80°C vorgetrocknet. Der andere Teil der Bögen wurde mittels kontinuierlichen Durchlauföfen (Heißluft/ IR Flachkanal [Hersteller SPS, Wuppertal] bei einer Geschwindigkeit von 3 m/min [Folientemperatur 85°C] vorgetrocknet). Alle Folien waren anschließend grifftrocken und blockfest.

### Thermoformen

| | |
|---|---|
| Thermoformanlage: | Adolf ILLIG, Heilbronn |
| Werkzeugtemperatur: | 60°C bei Bayfol DFA, bzw. 100 °C bei Makrofol^{®} DE1-1 |
| Folientemperatur: | 165°C bei Bayfol^{®} DFA, bzw. 190 °C bei Makrofol^{®} DE1-1 |
| Heizzeit: | 15 s bei Bayfol DFA, bzw. 20 s bei Makrofol^{®} DE1-1 |
| Werkzeug: | Heizungs-Lüftungsblende zur Herstellung von Folien für die Autoinnenausbau |

### Hochdruckverformverfahren

| | |
|---|---|
| HPF-Anlage: | HDVF Penzberg, Kunststoffmaschinen (Typ: SAMK 360) |
| Werkzeugtemperatur: | Bayfol^{®} DFA 100°C, Makrofol^{®} DE1-1 100°C |
| Folientemperatur: | Bayfol^{®} DFA 130°C, Makrofol^{®} DE1-1 140°C |
| Heizzeit: | Bayfol^{®} DFA 10 s Makrofol^{®} DE1-1 14 s) |
| Druck: | 100 bar |
| Werkzeug: | Heizungs-Lüftungsblende zur Herstellung von Folien für die Autoinnenausbau |

### UV - Härtung der verformten, bedruckten Folien:

| | |
|---|---|
| UV-Anlage: | IST-UV-Kanal |
| Lampentyp: | Quecksilber CM-Strahler 80W/cm |
| W-Dosis: | 4 Durchgänge x 500 mJ/cm² |
| Härtungsgeschwindigkeit: | 5 m/min |

### Beispiel 8: Herstellung von Formteilen

### Hinterspritzen der ABS-Folien:

Die dreidimensionalen, UV-gehärteten Folien wurden wie folgt hinterspritzt:

| | |
|---|---|
| Anlagentyp: | ARBURG 570C, Loßburg (Typ: Allrounder 2000-675) |
| Spritztemperatur: | 260°C Masse |
| Werkzeugtemperatur: | 60°C |
| Einspritzdruck: | 1400 bar |
| Hinterspritzmaterial: | Bayblend^{®} T65 (amorphes, thermoplastisches Polymerblend auf Basis von Polycarbonat und ABS; Bayer MaterialScience AG, Leverkusen, DE) |
| Füllzeit: | 2 s |

### Abprüfung der Oberflächen der verformten Folien und der Formteile:

Substrat: mit Noriphan HTR silbermetallic bedruckte Bayfol^{®}DFA, Herstellung nach Beispiel 7; als Vergleich wurden die nur mit Noriphan^{®} HTR bedruckten Folien analog Beispiel 7 jedoch ohne UV-Härtung hergestellt.

| | **Vergleich** | **Bedruckt mit Siebdruckfarbe nach Beispiel 5 (erfindungsgemäß)** | **Bedruckt mit Siebdruckfarbe nach Beispiel 6 (erfindungsgemäß)** |
|---|---|---|---|
| Lösemittelfestigkeit (Belastung für 2 min bei 23 °C mit einem Ethylacetat getränkten Wattebausch) | Deutliche irreversible Veränderung der Oberfläche | Keine Veränderung | Keine Veränderung |
| Lösemittelfestigkeit (Belastung für 2 min bei 23 °C mit einem Aceton getränkten Wattebausch) | Deutliche irreversible Veränderung der Oberfläche | Keine Veränderung | Veränderung der Oberfläche, nach Erholung (30 min RT) nur leichter Schatten sichtbar |
| Abriebbeständigkeit (Taber Abraser CS10F, Durchrieb nach Zyklen, Ergebnis normiert auf 10 µm Trockenfilmschicht) | 70 Zyklen | > 500 Zyklen | 120 Zyklen |
| Kratzfestigkeit (Anzahl Doppelhübe mit Stahlwolle Typ 0/0/0/0, 800 g Auflage, bis zum Durchrieb der Beschichtung) | 10 | 120 | 40 |

Die Prüfergebnisse zeigen deutlich, dass durch das erfindungsgemäße Verfahren Oberflächen auf verformten Folien mit besseren Beständigkeiten, Abriebfestigkeiten und Kratzfestigkeiten erzielt werden können, als nach den Verfahren des Stands der Technik.

## Patentansprüche

1. Verfahren zur Herstellung von ein- oder mehrfach bedruckten verformten Folien, bei dem eine thermoplastische Folie
A) optional mit einer oder mehreren farbgebenden Beschichtungsmitteln (Druckfarben) a) bedruckt und anschließend zur Beschichtung a*) getrocknet und/oder gehärtet wird, wobei das Beschichtungsmittel a) und die Trocknungs-/Härtungsbedingungen so gewählt werden, dass die Beschichtung a*) thermoplastisch ist und anschließend diese
B) mit mindestens einem Beschichtungsmittel b) bedruckt wird, welches mit aktinischer Strahlung härtbare Bestandteile enthält,
C) anschließend das Beschichtungsmittel b) ohne Einwirkung aktinischer Strahlung zu einer blockfesten und thermoplastischen Beschichtung b*) getrocknet und/oder gehärtet wird, wobei die Bestandteile des Beschichtungsmittels b) und das enthaltene Bindemittel von ihrem Einfluss auf die Glasübergangstemperatur der im Schritt C) getrockneten bzw. getrockneten und gehärteten Beschichtung b*) so gewählt werden, dass diese mindestens 35°C beträgt,
D) die beschichtete Folie durch thermisches Verformen wie Tiefziehen, Vakuum-Tiefziehen, Pressen, Blasverformen und/oder Hochdruckverformen verformt wird und
E) die Beschichtung b*) durch Einwirkung von aktinischer Strahlung zu einer duromeren Schicht gehärtet wird
F) und optional die Folie mit thermoplastischen Kunststoffen hinterspritzt oder mit ein-oder mehrkomponentigen Kunststoffen hinterschäumt wird.

2. Verfahren gemäß Anspruch 1 **dadurch gekennzeichnet, dass** im Schritt B) das Beschichtungsmittel b) über ein Siebdruckverfahren aufgebracht wird.

3. Verfahren nach Anspruch 1 oder 2 **dadurch gekennzeichnet, dass** im Schritt D) die Verformung unter Einwirkung von Druck von mindestens 20 bar durchgeführt wird.

4. Verfahren nach Anspruch 3 **dadurch gekennzeichnet, dass** im Schritt D) die Verformung bei einer Temperatur durchgeführt wird, die unterhalb der Glasübergangstemperatur der Folie liegt.

5. Verformte Folien hergestellt nach einem der Ansprüche 1 bis 4.

6. Verformte Folien gemäß Anspruch 5, **dadurch gekennzeichnet, dass** sie auf der nicht bedruckten Seite in einem Werkzeug mit gegebenenfalls gefüllten Polymeren wie Thermoplasten oder reaktiven ein- oder mehrkomponentigen Polymeren durch Hinterspritzen oder Hinterschäumen verbunden wird.

7. Verwendung der Folien gemäß Anspruch 5 zur Herstellung von Gebrauchsgegenständen.

8. Verwendung der Folien gemäß Anspruch 6 zur Herstellung von Gebrauchsgegenständen.

## Claims

1. Process for producing moulded foils that have been printed one or more times, in which a thermoplastic foil
A) is optionally printed with one or more colourant coating compositions (printing inks) a) and then dried and/or cured to yield coating a*), where the coating composition a) and the drying/curing conditions are selected in such a way that the coating a*) is thermoplastic, and this is then
B) printed with at least one coating composition b) which comprises constituents that are capable of being cured by actinic radiation,
C) the coating composition b) is then cured and/or dried without exposure to actinic radiation, thus giving a coating b*) that is thermoplastic and resistant to blocking, where the binder present and the constituents of the coating composition b) are selected for their effect on the glass transition temperature of the coating b*) dried or, respectively, dried and cured in step C) in such a way that this is at least 35°C,
D) the coated foil is moulded via a thermal moulding process, such as vacuum forming or other thermoforming, pressing, blow moulding and/or high-pressure moulding, and
E) the coating b*) is cured via exposure to actinic radiation, thus giving a thermoset layer,
F) and optionally thermoplastics are injection-moulded onto the back of the foil or single- or multicomponent plastics are foamed onto the back of the foil.

2. Process according to Claim 1, **characterized in that** in step B) the coating composition b) is applied by way of a screen-printing process.

3. Process according to Claim 1 or 2, **characterized in that** in step D) the moulding is carried out with exposure to pressure of at least 20 bar.

4. Process according to Claim 3, **characterized in that** in step D) the moulding is carried out at a temperature below the glass transition temperature of the foil.

5. Moulded foils produced according to any of Claims 1 to 4.

6. Moulded foils according to Claim 5, **characterized in that** they are bonded on the unprinted side, in a mould, with optionally filled polymers, such as thermoplastics or reactive single- or multicomponent polymers, via injection-moulding or, respectively, foaming onto the back of the material.

7. Use of the foils according to Claim 5 for producing consumer articles.

8. Use of the foils according to Claim 6 for producing consumer articles.

## Revendications

1. Procédé de fabrication de films déformés imprimés une ou plusieurs fois, selon lequel un film thermoplastique
A) est éventuellement imprimé avec un ou plusieurs agents de revêtement colorants (encres d'impression) a) et, après le revêtement a*), séché et/ou durci, l'agent de revêtement a) et les conditions de séchage/durcissement étant choisis de manière à ce que le revêtement a*) soit thermoplastique, puis celui-ci
B) est imprimé avec au moins un agent de revêtement b), qui contient des constituants durcissables par un rayonnement actinique,
C) puis l'agent de revêtement b) est séché et/ou durci sans l'action d'un rayonnement actinique pour former un revêtement b*) compact et thermoplastique, les constituants de l'agent de revêtement b) et le liant contenu étant choisis pour leur effet sur la température de transition vitreuse du revêtement b*) séché ou séché et durci à l'étape C), de manière à ce que celle-ci soit d'au moins 35 °C,
D) le film revêtu est déformé par une déformation thermique telle qu'un emboutissage, un emboutissage avec aspiration, une compression, une déformation par soufflage et/ou une déformation haute pression, et
E) le revêtement b*) est durci par l'action d'un rayonnement actinique pour former une couche duromère,
F) et le film est éventuellement surmoulé par injection avec des plastiques thermoplastiques ou surmoulé par moussage avec des plastiques mono- ou multicomposants.

2. Procédé selon la revendication 1, **caractérisé en ce qu'**à l'étape B), l'agent de revêtement b) est appliqué par un procédé de sérigraphie.

3. Procédé selon la revendication 1 ou 2, **caractérisé en ce qu'**à l'étape D), la déformation est réalisée sous l'action d'une pression d'au moins 20 bar.

4. Procédé selon la revendication 3, **caractérisé en ce qu'**à l'étape D), la déformation est réalisée à une température située sous la température de transition vitreuse du film.

5. Films déformés fabriqués selon l'une quelconque des revendications 1 à 4.

6. Films déformés selon la revendication 5, **caractérisés en ce qu'**ils sont reliés sur le côté non imprimé dans un outil avec des polymères éventuellement chargés tels que des thermoplastiques ou des polymères mono- ou multicomposants réactifs par surmoulage par injection ou surmoulage par moussage.

7. Utilisation des films selon la revendication 5 pour la fabrication d'articles usuels.

8. Utilisation des films selon la revendication 6 pour la fabrication d'articles usuels.
